# EUROPEAN PATENT APPLICATION

(11) **EP 4 614 843 A1**
(43) Date of publication of application: **10.09.2025**
(21) Application number: 25161484.8
(22) Date of filing: 04.03.2025
(51) Int. Cl.: H04B 17/345, H04W 24/10

(54) **METHOD AND APPARATUS**

(30) Priority: 05.03.2024 GB 202403164
(71) Applicant: Nokia Technologies Oy, 02610 Espoo (FI)
(72) Inventor: DHERE, Amol, Gistrup (DK); NIELSEN, Kim, Storvorde (DK); TIIROLA, Esa Tapani, Oulu (FI)
(74) Representative: Nokia EPO representatives

(57) **Abstract**

There is provided an apparatus, method, and computer program for causing a user equipment to perform: obtaining, based on at least one downlink carrier received during an uplink transmission, at least one value indicative of a self-interference by measuring a power difference in downlink resource elements affected by active resource elements of the uplink transmission and downlink resource elements affected by empty resource elements of the uplink transmission.

## Description

### FIELD

The present application relates to method(s), apparatus(es), and computer program(s) for measuring and/or reporting self-interference.

### BACKGROUND

A communication system can be seen as a facility that enables communication sessions between two or more entities such as user terminals, base stations and/or other nodes by providing carriers between the various entities involved in the communications session. A communication system can be provided for example by means of a communication network and one or more compatible communication devices. The communication sessions may comprise, for example, communication of data for carrying communications such as voice, video, electronic mail (email), text message, multimedia and/or content data and so on. Non-limiting examples of services provided comprise two-way or multi-way calls, data communication or multimedia services and access to a data network system, such as the Internet.

The communication system and associated devices typically operate in accordance with a given standard or specification which sets out what the various entities associated with the system are permitted to do and how that should be achieved. Communication protocols and/or parameters which shall be used for the connection are also typically defined. One example of a communications system is UTRAN (Universal Mobile Telecommunications Service terrestrial radio access network (e.g., 3G radio)). Other examples of communication systems are the long-term evolution (LTE) of the Universal Mobile Telecommunications System (UMTS) radio-access technology and so-called 5G or New Radio (NR) networks. NR is being standardized by the 3rd Generation Partnership Project (3GPP).

### SUMMARY

According to a first aspect, there is provided an apparatus for a user equipment, the apparatus comprising means for obtaining, based on at least one downlink carrier received during an uplink transmission, at least one value indicative of a self-interference by measuring a power difference in downlink resource elements affected by active resource elements of the uplink transmission and downlink resource elements affected by empty resource elements of the uplink transmission.

According to a second aspect, there is provided an apparatus for a user equipment comprising: at least one processor; and at least one memory comprising code that, when executed by the at least one processor, causes the apparatus to perform: obtaining, based on at least one downlink carrier received during an uplink transmission, at least one value indicative of a self-interference by measuring a power difference in downlink resource elements affected by active resource elements of the uplink transmission and downlink resource elements affected by empty resource elements of the uplink transmission.

According to a third aspect, there is provided a method for an apparatus for a user equipment, the method comprising obtaining, based on at least one downlink carrier received during an uplink transmission, at least one value indicative of a self-interference by measuring a power difference in downlink resource elements affected by active resource elements of the uplink transmission and downlink resource elements affected by empty resource elements of the uplink transmission.

According to a fourth aspect, there is provided an apparatus for a user equipment, the apparatus comprising obtaining circuitry for obtaining, based on at least one downlink carrier received during an uplink transmission, at least one value indicative of a self-interference by measuring a power difference in downlink resource elements affected by active resource elements of the uplink transmission and downlink resource elements affected by empty resource elements of the uplink transmission.

The following may apply in respect of each (e.g., at least one, optionally all) of the above first to fourth aspects.

The apparatus may transmit the at least one value to a network node.

The transmitting the at least one value indicative of a measured self-interference may comprise transmitting the at least one value using at least one of a radio resource control message, a media access control element, or downlink control information.

The apparatus may receive, from the network node, a configuration comprising an uplink transmission pattern associated with a combination of uplink and downlink carriers, wherein the uplink transmission pattern is to be used by the user equipment when performing self-interference measurements, the uplink transmission pattern comprising a mixture in frequency of active resource elements (e.g., transmissions in active resource elements) and empty resource elements (no transmission creating empty resource elements), wherein the means for obtaining the at least one value may be performed based on the received uplink transmission pattern.

The uplink transmission pattern may correspond to at least one of: a physical uplink shared channel demodulation reference signal, a physical uplink control channel demodulation reference signal, a sounding reference signal, or a physical uplink shared channel rate matched around predefined zero resource elements.

The transmission pattern may comprise consecutive active resource elements followed by consecutive empty resource elements that are allocated in consecutive frequency resources. The number of empty resource elements may be equal to or larger than the number of active resource elements when the source of self-interference is determined to be an uplink harmonic. The number of empty resource elements may be smaller than the number of active resource elements when the source of self-interference is determined to be an uplink fundamental.

The apparatus may further receive, from the network node, at least one indication of a transmission occasion when the user equipment should perform self-interference measurements based on a combination of uplink and downlink carriers, wherein the means for obtaining is performed during the transmission occasion.

The apparatus may transmit using at least one of said uplink carriers during the transmission occasion.

The at least one value indicative of a measured self-interference at the user equipment during the transmission occasion may comprise at least one of: a measure self-interference level, a measured output power, a maximum sensitivity degradation calculated by the user equipment based on the performed self-interference measurements, or a difference between a reference maximum sensitivity degradation and a maximum sensitivity degradation calculated by the user equipment based on self-interference measurements.

The at least one indication of a transmission occasion may comprise at least one of: an indication of a periodicity of transmission of the uplink transmission pattern; an indication of a slot offset; an indication of a number of measurement symbols; an indication of a number of consecutive slots with a measurement; an indication of where those measurement symbols are located within a time slot; an indication of a frequency offset of an uplink fundamental or harmonic to a downlink absolute reference channel number; an indication of a frequency offset of an uplink fundamental to a downlink absolute reference channel number; an indication of a frequency sub-band size for reporting self-interference; or a trigger for indicating the transmission opportunity.

The trigger may comprise an indication of whether the user equipment should stop or start performing self-interference measurements.

At least part of the at least one indication of a transmission occasion may be received in a radio resource control message, and/or media access control element and/or downlink control information.

The apparatus may further receive from the network node, an instruction to stop performing self-interference measurements.

The obtaining may further comprise: aligning self-interference measurement timing by aligning a fast fourier transform timing to an uplink symbol grid; aligning a self-interference measurement frequency by performing a frequency offset compensation for aligning uplink subcarriers and/or uplink harmonic subcarriers with respect to a physical resource block grid of a downlink absolute radio frequency channel number, and measuring a power difference by measuring a power difference in downlink resource elements received during the active resource elements relative to the downlink resource elements received during the empty resource elements, wherein the at least one value is indicative of said power difference.

The obtaining may further comprise: aligning self-interference measurement timing by using a fast fourier transform timing aligned to a downlink symbol grid to perform the measurements by performing a time offset compensation for an uplink symbol grid using a timing advance value, means for aligning a self-interference measurement frequency by performing a frequency offset compensation for aligning uplink harmonic subcarriers and/or uplink fundamental subcarriers with respect to a physical resource block grid of a downlink absolute radio frequency channel number, and measuring a power difference by measuring a power difference in downlink resource elements received during the active resource elements relative to the downlink resource elements received during the empty resource elements, wherein the at least one value is indicative of said power difference.

The downlink resource elements affected by active resource elements of uplink transmission and the downlink resource elements affected by empty resource elements of uplink transmission may be determined to be in alternate frequency resources.

The aligning a self-interference measurement frequency may comprise at least one of: determining an uplink fundamental or uplink harmonic to downlink frequency offset by calculating the modulus of (uplink channel number*harmonic order - downlink channel number, uplink subcarrier spacing), or determining a downlink harmonic to downlink frequency offset by calculating the modulus of (downlink channel number*harmonic order - uplink channel number, uplink subcarrier spacing).

The apparats may receive, from the network node, a request for user equipment capability information, and transmit, to the network node, user equipment capability information, the user equipment capability information comprising: a number of symbols required by the user equipment for performing self-interference measurements.

The apparatus may receive, from the network node, an indication of what parameter(s) the at least one value should correspond to.

According to an aspect, there is provided a non-transitory computer readable medium comprising program instructions that, when executed by an apparatus, cause the apparatus to perform at least the method according to any of the preceding aspects.

In the above, many different embodiments have been described. It should be appreciated that further embodiments may be provided by the combination of any two or more of the embodiments described above.

### DESCRIPTION OF FIGURES

Embodiments will now be described, by way of example only, with reference to the accompanying Figures in which:
Figure 1 shows a representation of a network system according to some example embodiments;
Figure 2 shows a representation of a control apparatus according to some example embodiments;
Figure 3 shows a representation of an apparatus according to some example embodiments;
Figure 4 illustrates an example transceiver architecture;
Figure 5 illustrates an example signal with active and empty resource elements in the transmission pattern;
Figure 6 illustrates example carrier aggregation;
Figures 7 to 11 illustrate example signalling; and
Figures 12 to 14 illustrate example operations that may be performed by apparatus described herein.

### DETAILED DESCRIPTION

The following describes operations that may be performed in relation to a user equipment performing measurements for quantifying a value of self-interference experienced by the user equipment.

In particular, the following considers a way of configuring the user equipment to perform measurements for deriving (e.g., determining) a value that quantifies a self-interference experienced by the user equipment on resource elements that both comprise a downlink transmission (e.g., "transmissions" or "active resource elements") and empty resource elements that do not comprise a downlink transmission (e.g., "null transmissions" or "no transmission creating empty resource elements").

The user equipment, or another entity to which the user equipment reports measurement results to, can use the measurement results from these different types of resource elements and knowledge of which resource elements are empty resource elements and which resource elements are not empty resource elements to derive a maximum sensitivity degradation (MSD) value for the user equipment. This derived MSD value can be used by a network node (such as an access network node) for making radio resource control decisions, such as decisions about resource allocation, for the user equipment, and to implement these decisions (e.g., perform resource allocation based on the derived MSD value). As these decisions are made based on empirical measurements (e.g., dynamic measurements of current radio resource conditions), they can be made more efficient that situations in which a static MSD value has been used for making such radio resource control decisions.

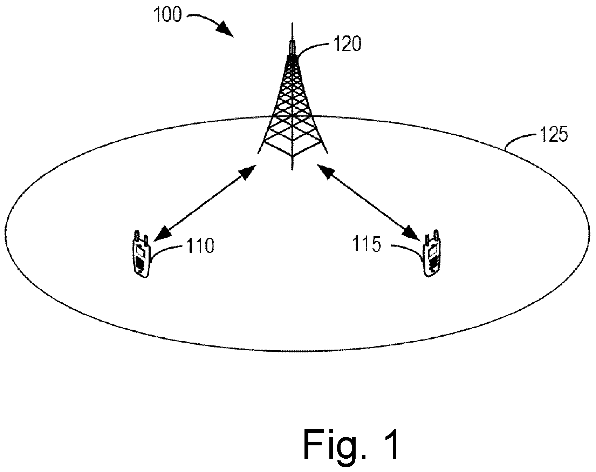

Figure 1 illustrates an example communication environment in which example embodiments of the present disclosure can be implemented.

Figure 1 shows an example communication environment 100 in which example embodiments of the present disclosure can be implemented.

In the communication environment 100, a plurality of communication devices, comprising user devices 110 and 115 (also referred to herein as a "terminal" or "terminal device") and a network device 120 (also referred to herein as a "network access node"), can communicate with each other. The network device 120 may serve a coverage area, called a cell 125. The user device 110 may have access to a communication network via the cell 125. In some example embodiments, both the user device 110 and the network device 120 may be configured to implement a beamforming technique and communicate with each other via a plurality of beams.

The term "terminal device" refers to any end device that may be capable of wireless communication. By way of example rather than limitation, a terminal device may also be referred to as a communication device, user equipment (UE), a Subscriber Station (SS), a Portable Subscriber Station, a mobile device, a Mobile Station (MS), or an Access Terminal (AT). The terminal device may include, but not limited to, a mobile phone, a cellular phone, a smart phone, voice over IP (VoIP) phones, wireless local loop phones, a tablet, a wearable terminal device, a personal digital assistant (PDA), portable computers, desktop computer, image capture terminal devices such as digital cameras, gaming terminal devices, music storage and playback appliances, vehicle-mounted wireless terminal devices, wireless endpoints, mobile stations, laptop-embedded equipment (LEE), laptop-mounted equipment (LME), USB dongles, smart devices, wireless customer-premises equipment (CPE), a machine-type communications (MTC) device, an Internet of Things (IoT) device, a watch or other wearable, a head-mounted display (HMD), a vehicle, a drone, a medical device and applications (e.g., remote surgery), an industrial device and applications (e.g., a robot and/or other wireless devices operating in an industrial and/or an automated processing chain contexts), a consumer electronics device, a device operating on commercial and/or industrial wireless networks, and the like. The terminal device may also correspond to a Mobile Termination (MT) part of an IAB node (e.g., a relay node). In the following description, the terms "terminal device", "communication device", "terminal", "user device", "user equipment" and "UE" may be used interchangeably.

**As** used herein, the term "network device" is used interchangeably with "network access node", and refers to a node in a communication network via which a terminal device accesses the network and receives services therefrom. The network device may refer to a base station (BS) or an access point (AP), for example, a node B (NodeB or NB), an evolved NodeB (eNodeB or eNB), an NR NB (also referred to as a gNB), a Remote Radio Unit (RRU), a radio header (RH), a remote radio head (RRH), a relay, an Integrated Access and Backhaul (IAB) node, a low power node such as a femto, a pico, a non-terrestrial network (NTN) or non-ground network device such as a satellite network device, a low earth orbit (LEO) satellite and a geosynchronous earth orbit (GEO) satellite, an aircraft network device, and so forth, depending on the applied terminology and technology. In some example embodiments, radio access network (RAN) split architecture comprises a Centralized Unit (CU) and a Distributed Unit (DU) at an IAB donor node. An IAB node comprises a Mobile Terminal (IAB-MT) part that behaves like a UE toward the parent node, and a DU part of an IAB node behaves like a base station toward the next-hop IAB node.

In some example embodiments, a link from the network device 120 to the user device 110 or 115 is referred to as a DL, while a link from the user device 110 or 115 to the network device 120 is referred to as a UL. Links are also referred to herein as "channels". In DL, the network device 120 is a Tx device (or a transmitter), and the user device 110 or 115 is a Rx device (or a receiver). In UL, the user device 110 or 115 is a Tx device (or a transmitter), and the network device 120 is a Rx device (or a receiver). A link between the user device 110 and another user device (not shown) is referred to as a sidelink (SL). In SL, one of the user devices is a Tx device (or a transmitter), and the other of the user devices is a Rx device (or a receiver).

Communications in the communication environment 100 may be implemented according to any proper communication protocol(s), comprising, but not limited to, cellular communication protocols of the first generation (1G), the second generation (2G), the third generation (3G), the fourth generation (4G), the fifth generation (5G), the sixth generation (6G), and the like, wireless local network communication protocols such as Institute for Electrical and Electronics Engineers (IEEE) 802.11 and the like, and/or any other protocols currently known or to be developed in the future. Moreover, the communication may utilize any proper wireless communication technology, comprising but not limited to: Code Division Multiple Access (CDMA), Frequency Division Multiple Access (FDMA), Time Division Multiple Access (TDMA), Frequency Division Duplex (FDD), Time Division Duplex (TDD), Multiple-Input Multiple-Output (MIMO), Orthogonal Frequency Division Multiple (OFDM), Discrete Fourier Transform spread OFDM (DFT-s-OFDM) and/or any other technologies currently known or to be developed in the future.

In the following, reference is made to both a carrier aggregation (CA) system and to a dual connectivity (DC) system.

A carrier aggregation system aggregates a plurality of component carriers (CCs). A cell in the carrier aggregation system may be classified into a primary cell, a secondary cell, and/or a serving cell. The primary cell signifies a cell operated in a primary frequency. The primary cell signifies a cell which UE performs an initial connection establishment procedure or a connection reestablishment procedure or a cell indicated as a primary cell in a handover procedure. The secondary cell signifies a cell operating in a secondary frequency. Once the radio resource control (RRC) connection is established, the secondary cell is used to provide an additional radio resource.

The carrier aggregation system may support a plurality of component carriers (CCs). Stated differently, the carrier aggregation system may comprise a plurality of serving cells configured to communicate with a UE using at least one respective carrier frequency.

Dual connectivity systems relate to architectures that allow the simultaneous connection of a UE using different radio access technologies to different base stations, for example, a macro cell base station and a small cell base station. Radio access technologies that combine in the dual connectivity systems can be of different generations, such as a fifth generation and a sixth generation radio access technology is used in a simultaneous active operation, that makes it dual connectivity.

In DC, the gNodeB for the primary cell (Pcell) may be referred to as a master gNodeB (hereinafter referred to as MgNB). In addition, the gNodeB only for the secondary cell (Scell) may be referred to as a secondary gNodeB (hereinafter referred to as SgNB).

A cell group including a primary cell (Pcell) implemented by MgNB may be referred to as a master cell group (MCG) or PUCCH cell group 1. A cell group including a secondary cell (Scell) implemented by the SeNB may be referred to as a secondary cell group (SCG) or PUCCH cell group 2.

Meanwhile, among the secondary cells in the secondary cell group (SCG), a secondary cell in which the UE can transmit Uplink Control Information (UCI), or the secondary cell in which the UE can transmit a PUCCH may be referred to as a super secondary cell (Super SCell) or a primary secondary cell (Primary Scell; PScell).

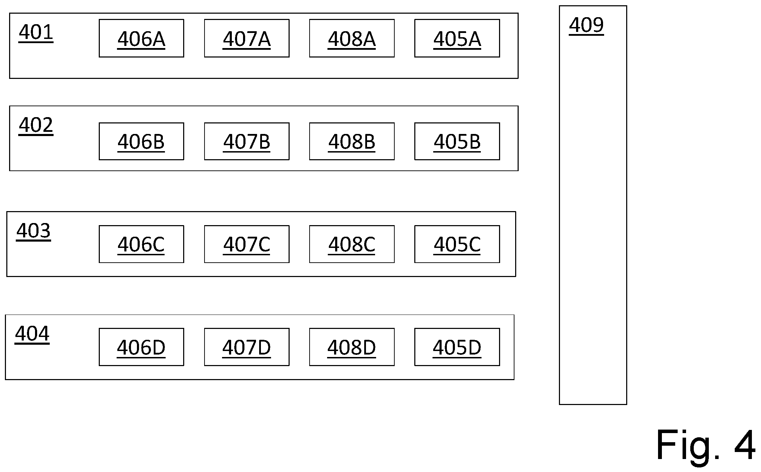

Both of these systems (dual carrier and carrier aggregation) may be considered as systems in which uplink and downlink transmissions may be scheduled simultaneously on respective frequency carriers. It is therefore understood that the following described techniques from Figure 4 onwards may be applied in respect of any system in which uplink and downlink transmissions may be scheduled to occur simultaneously in time.

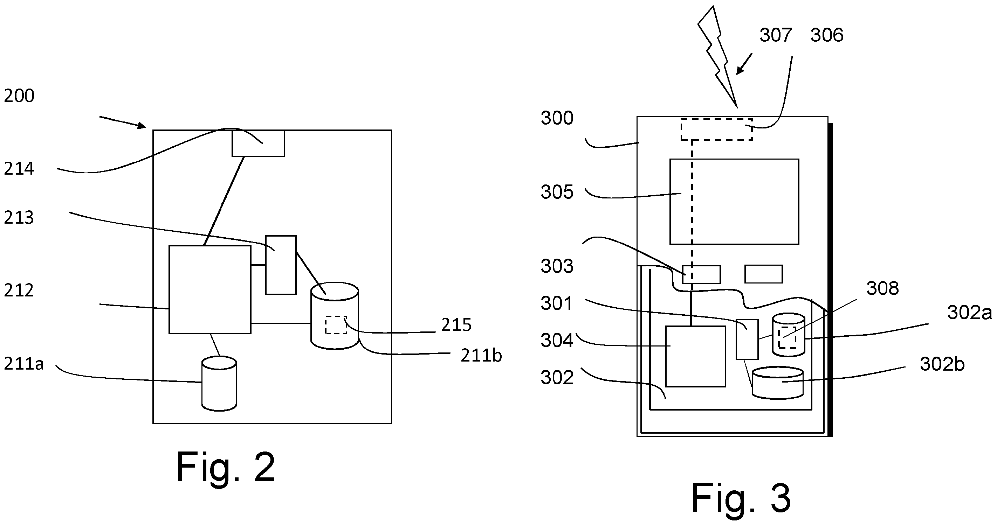

Figure 2 illustrates an example of a control apparatus 200 for causing a network device 120 (such as the network device described in Figure 1) to perform its operations. The control apparatus may comprise at least one random access memory (RAM) 211a, at least on read only memory (ROM) 211b, at least one processor 212, 213 and an input/output interface 214. The at least one processor 212, 213 may be coupled to the RAM 211a and the ROM 211b. The at least one processor 212, 213 may be configured to execute an appropriate software code 215. The software code 215 may for example allow to perform one or more steps to perform one or more of the present aspects. The software code 215 may be stored in the ROM 211b. The control apparatus 200 may be interconnected with another control apparatus 200 controlling another function of the network device. In some embodiments, each function of the network device comprises a control apparatus 200. In some exemplary embodiments, the apparatus 200 may be implemented at the network device 120 or may be the network device 120.

Figure 3 illustrates an example of a terminal 300, such as the user device 110, 115 illustrated on Figure 1. The terminal 300 may be provided by any device capable of sending and receiving radio signals, such as the user device described herein. The terminal 300 may provide, for example, communication of data for carrying communications. The communications may be one or more of voice, electronic mail (email), text message, multimedia, data, machine data and so on.

The terminal 300 may receive signals over an air or radio interface 307 via appropriate apparatus for receiving and may transmit signals via appropriate apparatus for transmitting radio signals. In Figure 3 transceiver apparatus is designated schematically by block 306. The transceiver apparatus 306 may be provided for example by means of a radio part and associated antenna arrangement. The antenna arrangement may be arranged internally or externally to the mobile device.

The terminal 300 may be provided with at least one processor 301, at least one memory ROM 302a, at least one RAM 302b and other possible components 303 for use in software and hardware aided execution of tasks it is designed to perform, including control of access to and communications with access systems (such as a network access system provided by the network device described above in relation to Figures 1 and 2) and other communication devices. The at least one processor 301 is coupled to the RAM 302b and the ROM 302a. The at least one processor 301 may be configured to execute an appropriate software code 308. The software code 308 may for example allow to perform one or more of the present aspects. The software code 308 may be stored in the ROM 302a.

The processor, storage and other relevant control apparatus can be provided on an appropriate circuit board and/or in chipsets. This feature is denoted by reference 304. The device may optionally have a user interface such as key pad 305, touch sensitive screen or pad, combinations thereof or the like. Optionally one or more of a display, a speaker and a microphone may be provided depending on the type of the device.

In some exemplary embodiments, the terminal 300 may be an apparatus comprising at least one processor and at least one memory storing instructions that, when executed by the at least one processor, cause a user device 110, 115 to perform examples or embodiments described in this document.

When a UE such as described in Figure 3 is operated using more than one transceiver active at different frequency spectrum allocations (which may occur during carrier aggregation and/or dual connectivity operations), the UE radio hardware is potentially subjected to self-interference.

Self-interference may arise in a UE's radio hardware when the UE transmitter has frequency spectrum content (e.g., a uplink transmit frequency (the fundamental frequency), a harmonic response, or harmonic products of the uplink transmit frequenc(ies)) that create interference inside an active receive band of the same UE. The coupling of the transmitted signal to the receiver happens through the proximity of a transceiver printed circuit board (PCB) and through antennas, which makes the impact depend on the design. An example is shown in Figure 4.

Figure 4 illustrates an example UE radio frequency architecture having first to fourth front end module 401 to 404. Each front end module is associated with a respective frequency range of operation at any single time. For example, the first front end module 401 may be configured to operate in a range of 3-5GHz at a first time, the second front end module 402 may be configured to operate in a range of 2.5 to 2.8 GHz at the first time, the third front end module may be configured to operate in a range of 1.7 to 2.1 GHz at the first time, and the fourth front end module may be configured to operate in a range of 600MHz to 1GHz at the first time. It is understood that these frequency ranges are only examples, and that the front end modules may be associated with other frequencies.

Each of the first to fourth front end modules comprise respective first and second switches 405A-406D, respective filters 407A-407D, and respective amplifiers 408A-408D. A transceiver (e.g., PCB) 409 is configured to provide an input to the first switches 405A to 405D.

What determines the occurrence of interference is the exact frequency location of the simultaneous transmission and reception activities at the UE. In the example frequency ranges of Figure 4, there is coupling between the third and fourth front end modules 403, 404.

There are different types of sources in the UE that can lead to self-interference: uplink (UL) harmonics, harmonic mixing, cross band interference, and intermodulation distortion. These are described in more detail below, but can generally be grouped into two types: harmonic products, and intermodulation products.

Uplink harmonics, harmonic mixing, and crossband interference are examples of harmonic product-types of interference. Harmonic products are single tone distortion products caused by device nonlinearity. In more detail, when a non-linear device is stimulated by a signal at frequency f, spurious output signals are generated at the harmonic frequencies of 2f , 3f ... Nf, etc. The order of the harmonic products is given by the frequency multiplier. For example, the second harmonic is known as a second order product, the third harmonic is known as a third order product, and so on. Harmonics are usually measured in dBc, which refers to dB below the carrier (fundamental) output signal.

Uplink harmonics may cause self-interference in a downlink component carrier when the harmonic of the uplink falls inside the other downlink component carrier bandwidth at the fundamental carrier frequency of the downlink band.

Harmonic mixing may cause self-interference when a combination of the uplink harmonic coincides with the downlink harmonic of downlink components.

Cross band interference is an expression of self-interference when the output spectrum of the UL component carrier falls inside the downlink component carrier bandwidth. This can be considered as adjacent channel leakage of the transmitter, where the leakage depends on the non-linear behaviour of the power amplifier.

Intermodulation distortion (IMD) is an example of intermodulation product-types of interference. Intermodulation products are multi-tone distortion products that result when two or more signals are present at the input of a nonlinear device. The spurious products that are generated due to the non-linearity of a device are related to the original input signals frequencies.

Intermodulation Distortion occurs when two uplink component carriers intermodulate (e.g., mix), and the product of the intermodulation (e.g., mixing) of the uplink component carriers fall inside the receiver band of one or the other downlink component carrier bandwidth at the fundamental carrier frequency of the downlink band.

The harmonic product and intermodulation product thus respectively represent interference arising from when only one uplink component carrier is used in a band combination and those that have two uplink component carriers. This is illustrated in Table 1, which also shows the relations. In Table 1, ULx/DLy means the x harmonic of the uplink can match the yth harmonic of the downlink.

**Table 1 MSD types and combination causing self-interference.**

| **1 UL** | **Relation** | | **2UL** | **Relation bands A & B** |
|---|---|---|---|---|
| UL Harmonic | UL2/DL1 | | IMD2 | UL1A-UL1B |
| | UL3/DL1 | | | UL1B-UL1A |
| | UL4/DL1 | | | UL1A+UL1B |
| | UL5/DL1 | | | |
| Harmonic | UL1/DL2 | | IMD3 | UL2A-UL1B |
| mixing | UL1/DL3 | | | UL2B-UL1A |
| | UL1/DL4 | | | UL2A+UL1B |
| | UL1/DL5 | | | UL2B+UL1A |
| | UL2/DL3 | | IMD4 | 3A/B-1A/B, 3A/B+1A/B, 2A/B- |
| | UL3/DL4 | | | 2A/B, 2A/B+2A/B combinations |
| | UL4/DL3 | | IMD5 | 3A/B-2A/B, 3A/B+2A/B, 4A/B-1A/B, 4A/B+1A/B |
| Cross band | UL1/DL1 | | | combinations |

A metric known as an MSD value is used for accounting for the effects of self-interference in current 3GPP systems. The MSD value is illustrated in the following discussions.

When a UE is configured to simultaneously receive a transmission using one or more downlink frequency bands and to transmit a transmission using one or more uplink frequency bands, a harmonics component and/or an intermodulation distortion (IMD) component may occur in the received downlink transmission when a frequency band of at least one of the uplink signals falls into at least one of the UE's downlink frequency band. Stated differently, when a UE transmits an uplink signal, the harmonics component and the intermodulation distortion (IMD) component may occur, which may affect the downlink band of the terminal itself.

To address this, the terminal is configured to satisfy a reference sensitivity power level (known as REFSENS). REFSENS is the minimum average power for each antenna port of the terminal when receiving the downlink signal that satisfy a reception of the signal at an error rate according to standard specifications. When the harmonics component and/or IMD component occur, there is a possibility that the REFSENS for the downlink signal may not be satisfied due to the uplink signal transmitted by the terminal itself.

To help with this, the MSD is defined for a particular combination of uplink and downlink bands as a value corresponding to a maximum allowed increase of the REFSENS for that particular combination. When the MSD is defined for a specific operating band combination of the terminal (which may be configured as part of a carrier aggregation configuration), the REFSENS of the corresponding operating band may be relaxed by the amount of the defined MSD.

In 3GPP discussions, a study was conducted to determine whether UE self-interference performance in multi-carrier configurations deviated significantly from the UE self-interference performance defined in 3GPP specifications. It was found that the metric used for allowing the UE a relaxation towards reference sensitivity (in the form of a metric known as "maximum sensitivity degradation" (MSD)) was outdated and of little use as a UE may have much better MSD than currently defined in the 3GPP specifications. The study concluded that a static MSD value signalled as a UE capability of affected carrier aggregation (CA) and/or Dual connectivity (DC) combinations would allow UEs to inform the network of an improved MSD performance relative to the specifications, including receiver victim, transmitter aggressor(s), MSD type, power class, and MSD class.

The following aims to address at least one of the above-mentioned issues.

In particular, the following aims to provide at least one method for enabling a network to dynamically determine an MSD value for a UE. Stated differently, the following describes at least one method for allowing a network to determine an MSD value for a specific UE using measurement information relating to self-interference obtained from that specific UE. The self-interference measurement information may be reported to the network with associated uplink transmission power, so that the network can derive an MSD value that currently fits the operation and network environment currently being experienced by that UE.

In more detail, the following describes a resource configuration pattern that has known location of "nulls" (e.g., empty resource elements, where an empty resource element may be considered as at least one predefined subcarrier on a predefined orthogonal frequency division multiplex (OFDM) symbol). The UE performs a so-called "gap-less" measurement on the resource configuration pattern that includes measurements based on both the null resource elements and the active (not null) resource elements in the uplink transmission. The UE reports self-interference measurement based on the measurements on both types of resources to the network. The UE (or a network node to which the UE reports its measurement results) may use the self-interference measurement results along with current output power level to determine a specific MSD value for that UE during the measurement period. The network may subsequently use this specific MSD value when allocating resources to the UE and/or for making and implementing other types of radio resource control decisions.

A gapless method of self-interference measurement has much less impact on the downlink capacity than non-gapless methods of self-interference measurement.

To illustrate this, example resource configurations will first be discussed, followed by example signalling that may be performed between the UE making the measurements and the network.

In general, the resources allocated to a UE may be configured to have known locations of nulls configured therein. These known locations of nulls will be referred to herein as a null "pattern".

The configuration and implementation of the null pattern on which a UE performs self-interference measurements can be realised using any of several types of signals, including DMRS signals (e.g., DMRS Type 1 or Type 2 symbols with nulls formed by no data in other code division multiplex (CDM) groups), Sounding Reference signals (SRS) (e.g., SRS for uplink with transmission comb-2 and NULLs in the other comb), and/or rate matching (e.g., by rate matching resources within the rate matching framework). These different types of implementation will be considered in turn below.

First, null pattern configuration in DMRS will be considered.

Such DMRS null patterns can be configured using uplink DMRS symbols by setting the number of CDM groups without data to 2 for DMRS type 1, and/or by setting the number CDM groups without data for 3 for DMRS type 2. All the DMRS ports of the UE in an UL single-user (SU) multiple-input-multiple output (MIMO) scenario should be within the same CDM group. This leaves the other CDM groups with NULLs that may be used for self-interference measurement purposes.

For example, periodic transmission of four DMRS type 1 symbols with the NULL pattern can be configured by setting a radio resource control (RRC) configuration to comprise a DMRS Configuration information element to define: Type 1, Maximum length 2, Additional positions 1, Sequence repetition, Optional: Number of CDM groups without data = 2, defining the periodicity and slot offset, and optionally signalling a harmonic to DL absolute radio frequency channel number (ARFCN) frequency offset.

This RRC signalling (especially the optional "Number of CDM groups" parameter) may override a corresponding parameter in the downlink control information (DCI) that schedules an uplink transmission in that resource. The sequence repetition factor may also be used to generate smaller DMRS sequences which can be repeated multiple times to give more uniform harmonic products.

Although the preceding example illustrates periodic null transmissions (e.g., alternating transmissions and NULLs in this preceding example), it is understood that the null pattern may comprise aperiodic nulls. This may be allocated by defining the RRC configuration to comprise a DMRS Configuration information element indicating that the information element is Type 1, has a maximum length of 2, and additional position 1, optionally the harmonic to DL ARFCN offset, and that the measurement is to be triggered by signalling a DCI format 0_1 having Antenna ports index with CDM groups without data =2, and a self-interference measurement trigger: 1 bit.

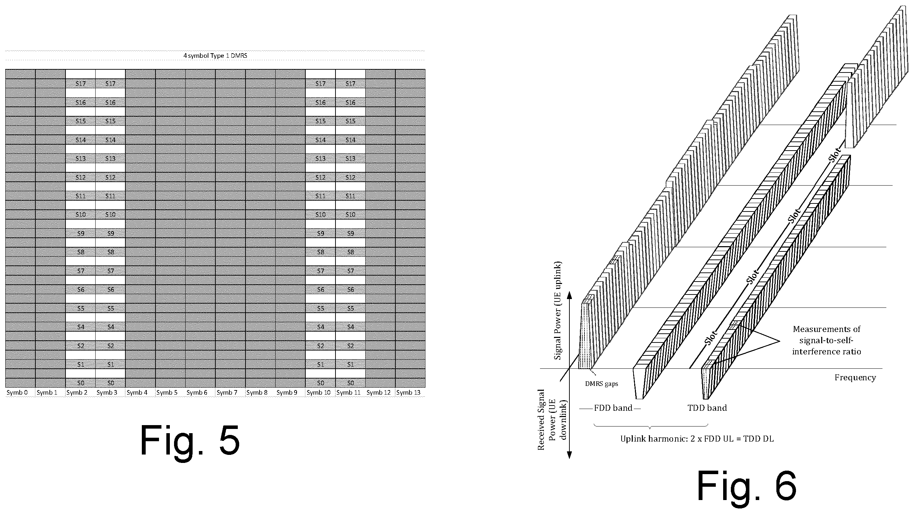

An example null pattern that is configured using periodic allocation of NULLS for DMRS type 1 is illustrated with respect to Figure 5. This null pattern of Figure 5 corresponds to DMRS type 1 pattern with length of 2 symbols in UL slots and with 2 CDM groups without data. This pattern repeats also in the harmonics, allowing the UE to measure self-interference and signal-to-self-interference ratio.

The pattern of Figure 5 is included in the frequency division duplex (FDD)-time division duplex (TDD) band combination shown across 5 slots of 14 symbols in Figure 6. In this example of Figure 6, the FDD transmission has a 2nd order harmonic that falls inside the TDD receive band. This results in the received signal being subjected to self-interference. Having the NULLS in DMRS uplink symbols of the FDD transmission will cause the same on/off pattern to be present in the second harmonic response in the TDD receive symbols. The network node (e.g., an access network node) is aware of the null pattern, and so can know and signals the UE of the allocation for the dedicated slots the UE must use for the self-interference measurement. Based on this allocation and the frequency offset information related to FDD-FDD, a FDD-TDD and/or TDD-TDD relation is provided to the UE by the network node, the UE can configure the self-interference measurement method.

Second, sounding reference signal null pattern configurations will be considered.

The uplink SRS can be used in transmission comb-2 with the required number of symbols to generate the alternating pattern of NULLS when the comb for carrying the other SRS signal is empty.

A single antenna may be sounded using the SRS sequence transmitted at a predefined time. For example, periodic transmission of SRS for self-interference measurements may be performed using an RRC configuration message. This RRC configuration message may comprise an uplink SRS configuration (e.g., comprising at least one of Transmission comb-2, a Number of symbols, Bandwidth, Sequence repetition, an indication that self-interference measurements are to be performed), an indication that the periodicity is a slot offset, and/or a harmonic to DL ARFCN offset

The indication that self-interference measurements are to be performed may further indicate that the SRS is to be also used for the self-interference measurements, and hence that the other comb is to remain empty. A sequence repetition factor may be used to generate smaller SRS sequences that can be repeated multiple times to give more uniform harmonic products.

Analogously, for aperiodic SRS allocation, the RRC configuration information may comprise an uplink UL SRS configuration (e.g., comprising at least one of Transmission comb-2, a Number of symbols, a frequency bandwidth, a sequence repetition, an indication that self-interference measurements are to be performed), an indication that DCI format 0_1 will be used as an aperiodic trigger using a resource identifier comprised in the RRC configuration, and/or a harmonic to DL ARFCN offset

Third, rate matching configurations of null patterns will be considered.

The so-called rate matching (RM) framework was defined in NR Rel-15. RM supports the definition of resource element -level RM resources (e.g. LTE CRS pattern for 4G-5G dynamic spectrum sharing scenario), and the definition of resource block and symbol level rate matching resources. This allows the "blanking" of the physical downlink shared channel (PDSCH) on any OFDM symbol in time and any resource block (RB) in frequency for the predefined slot(s). The blanking is identical to creating null transmission.

The RM resources may be configured via RRC signalling, and can be applied either dynamically or semi-statically manner. Rate matching may be configured as part of the PDSCH-Configuration.

Rate matching resources are not used for PDSCH transmission. Even if PDSCH resource allocation covers those resources (at least partially), they're not taken into consideration when preparing the transmitted signal (e.g., they're unused). In NR, RM framework is defined for DL only.

The RM framework currently defined for PDSCH configuration can be reused for creation of Self-Interference measurement pattern for uplink (physical uplink shared channel (PUSCH)) configuration.

For example, the null pattern(s) may be configured semi-statically using RRC signalling as part of PUSCH-Configuration. The null pattern may cover one or more symbols of a slot. The null pattern may cover one or more resource blocks (of bandwidth part or of carrier). The null pattern may cover a predefined resource elements of the related resource blocks (e.g. even or odd resource elements). The null pattern may be configured in such that it does not overlap with PUSCH DMRS or SRS.

As another example, the null pattern usage may be controlled dynamically using one or more bits in an UL grant (such as DCI format 0_1). Stated differently, certain DCI formats may correspond to different null patterns and/or activation of null pattern usage. For example DCI format 0_1 may indicate "with pattern" while "DCI format 0_0 may indicate "without pattern".

As another example, the usage of the null pattern can be switched on/off using media access control (MAC) signalling.

Combinations of the above semi-static and dynamic signalling may also be performed. For example, it is possible to configure one or more patterns via RRC, with a selection of one of said one or more patterns (out of multiple patterns) being performed dynamically using DCI and/or MAC signalling.

Further, the usage of a null pattern may be switched on and/or off via RRC signalling (e.g., semi statically).

In all of the above examples, the null pattern may be configured to be UE-specific, and/or cell-specific.

These can be advantageous for, for example, uplink multiple user (MU)-MIMO scenarios when the UL DMRS symbols from a co-scheduled UE can disturb the measurements being performed by a target UE.

Once a network has configured the UE with the null pattern (e.g., using DMRS signalling, SRS signalling, and/or rate matching signalling), the network may cause periodic or aperiodic usage of such resources.

For example, a network can signal periodic transmission of this NULL pattern for self-interference-measurement using a certain periodicity and slot-offset.

As another example, the number of measurement symbols, their locations within a measurement slot, and sequence may be pre-configured via RRC. In such a case, the transmission of NULL pattern can be triggered aperiodically using DCI format 0_1.

As another example, instead of dynamically triggering a self-interference measurement period, the network can use a self-interference measurement period instead of the triggered measurements for configuring a UE (taking the co-channel UEs allocation into consideration for the resource allocation of the NULL pattern in a non-overlapping allocation structure).

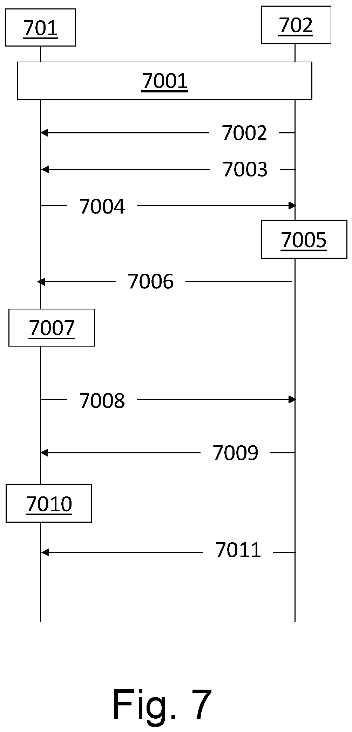

Figures 7 to 11 illustrate example signalling that may be performed in relation to a UE performing self-interference measurements. It is understood that a null pattern configuration as described above in relation to any of DMRS signalling, SRS signalling, and/or rate matching signalling may be used in any of these examples of Figures 7 to 11.

Figure 7 illustrate example signalling that may be performed for periodic configuration of slots for performing self-interference measurements.

Figure 7 illustrates signalling that may be performed between a UE 701 and a network node 702. The network node may comprise an access network node, such as described above in relation to Figure 2. The UE may comprise a terminal and/or an apparatus as described above in relation to Figure 3.

During 7001, the network node 702 determines to configure the UE 701 with information on the frequency ranges, bands, and channels that the network node is using. Based on this positive determination to perform this configuration, the following signalling may be performed.

During 7002, the network node 702 signals the UE 701. This signalling may comprise a system information block (SIB), such as SIB 11. This signalling may be comprised in an RRC message. This signalling may comprise a channel range per frequency band, and a potential carrier aggregation combination list. The UE 702 may store this information of 7002.

During 7003, the network node 702 signals the UE 701 to request UE capability information.

During 7004, the UE 701 signals the network node 702 to provide the requested UE capability information. This signalling may comprise a lower MSD capability information indicating a worse case value for the MSD value. The UE capability information may further comprise an indication of the UE's self-interference-measurements capability using the number of symbols required for SI measurements. The network node may use this reported lower MSD capability for making RRC decisions until a dynamic MSD value is obtained via UE self-interference measurement.

During 7005, the network node identifies a band combination for which the UE can be affected by self-interference. Stated differently, the network node 702 identifies a specific band combination as an MSD-affected frequency band combination. Based on this identification, the network node determines relevant information for configuring the UE with a measurement method that allows the UE to determine the level of self-interference in the affected receive band, before the UE reaches maximum output power. For example, the network node 702 may determine a resource grant for the UE 702 for configuring the UE with an uplink resource allocation for performing self-interference measurements. This signalling pattern may be as described above.

During 7006, the network node 702 signals the UE 701. This signalling may comprise an RRC setup message and/or an RRC reconfiguration message.

The signalling of 7006 may comprise additional information of a periodic allocation of an uplink symbol pattern. This additional information may comprise a periodicity of the measurements to be performed, and the slot offset to configure the uplink transmission. Optionally, the offset between DL ARFCN and uplink harmonic may be comprised in the signalling of 7006.

During 7007, the UE configures its radio so that it complies with the configuration information comprised in the signalling of 7006 (including the configuration comprised in the additional information). The UE 701 may store any information pertaining (e.g., relating to or otherwise corresponding to) a self-interference measurement configuration.

During 7008, the UE 701 signals the network node to confirm that the RRC configuration of 7006 has been applied at the UE.

During 7009, the network node 702 signals the UE to trigger the self-interference reporting on. This trigger may be signalled as discussed above. In an example, this signalling may be comprised in a media access control CE instruction.

During 7010, the UE 701 receives the slot configuration to apply the uplink configuration and measurement method of self-interference determination. Although not shown, the UE may perform measurements on the self-interference in accordance with the configuration of 7006 until 7011, when the network node 702 signals the UE 701 with an instruction to stop reporting the self-interference measurement results. The signalling of 7011 may be comprised in a MAC CE instruction.

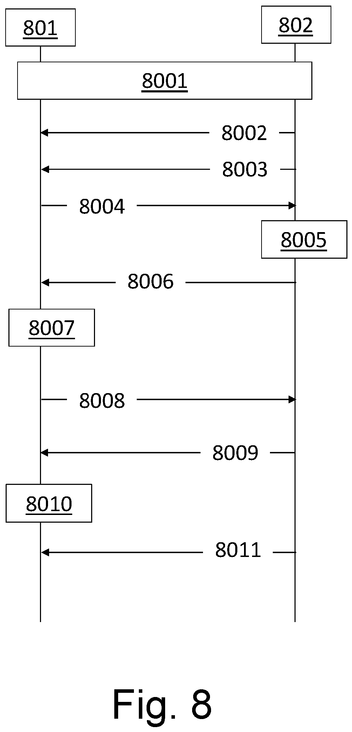

Figure 8 illustrates another example in which a self-interference measurement period is configured. Stated differently, a network node configures a period for self-interference measurement in which it is guaranteed that there is no co-channel UE in the uplink UL generating the same pattern (as this may disturb the SI measurement).This may be useful when the required number of symbols for self-interference measurement cannot be configured within 1 slot.

Figure 8 illustrates signalling that may be performed between a UE 801 and a network node 802. The network node may comprise an access network node, such as described above in relation to Figure 2. The UE may comprise a terminal and/or an apparatus as described above in relation to Figure 3. 8001 to 8005 may correspond to the operations of 7001 to 7005.

During 8001, the network node determines to configure the UE with information on the frequency ranges, bands, and channels that the network node is using. Based on this positive determination to perform this configuration, the following signalling may be performed.

During 8002, the network node 802 signals the UE 801. This signalling may comprise a system information block (SIB), such as SIB 11. This signalling may be comprised in an RRC message. This signalling may comprise a channel range per frequency band, and a potential carrier aggregation combination list. The UE 802 may store this information of 8002.

During 8003, the network node 802 signals the UE 801 to request UE capability information.

During 8004, the UE 801 signals the network node 802 to provide the requested UE capability information. This signalling may comprise a lower MSD capability information indicating a worse case value for the MSD value. The UE capability information may further comprise an indication of the UE's self-interference-measurements capability using the number of symbols required for SI measurements.

During 8005, the network node identifies a band combination for which the UE can be affected by self-interference. Stated differently, the network node 802 identifies a specific band combination as an MSD-affected frequency band combination. Based on this identification, the network node determines relevant information for configuring the UE with a measurement method that allows the UE to determine the level of self-interference in the affected receive band, before the UE reaches maximum output power. For example, the network node 802 may determination a resource grant for the UE 802 for configuring the UE with an uplink resource allocation for performing self-interference measurements. This signalling pattern may be as described above.

During 8006, the network node 802 signals the UE 801. This signalling may comprise an RRC setup message and/or an RRC reconfiguration message.

The signalling of 8006 may comprise additional information of a periodic allocation of an uplink symbol pattern. This additional information may comprise a periodicity of the measurements to be performed, and the slot offset to configure the uplink transmission. Optionally, the offset between DL ARFCN and uplink harmonic may be comprised in the signalling of 8006.

During 8007, the UE configures its radio so that it complies with the configuration information comprised in the signalling of 8006 (including the configuration comprised in the additional information). The UE 801 may store any information pertaining (e.g., relating to or otherwise corresponding to) a self-interference measurement configuration.

During 8008, the UE 801 signals the network node to confirm that the RRC configuration of 8006 has been applied at the UE.

During 8009, the network node 802 signals the UE to trigger the self-interference reporting on. This trigger may be signalled as discussed above. In an example, this signalling may be comprised in a media access control CE instruction. This request may be for a duration equal to the SI measurement period configured via 8006.

During 8010, the UE 801 receives the slot configuration to apply the uplink configuration and measurement method of self-interference determination. Although not shown, the UE may perform measurements on the self-interference in accordance with the configuration of 8006 until the end of the measurement period configured during 8006.

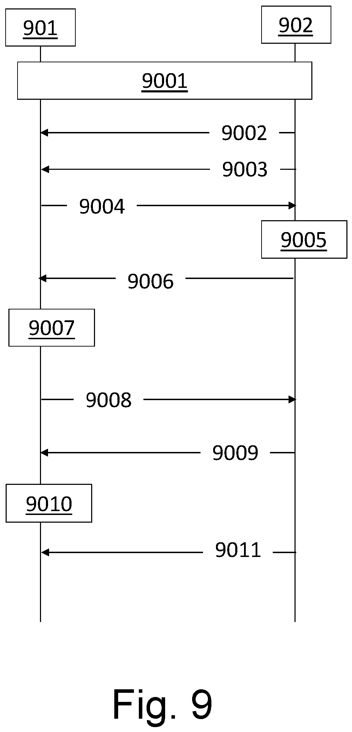

Figure 9 illustrates an example of an aperiodic configuration.

Figure 9 illustrates signalling that may be performed between a UE 901 and a network node 902. The network node may comprise an access network node, such as described above in relation to Figure 2. The UE may comprise a terminal and/or an apparatus as described above in relation to Figure 3. 9001 to 9005 may correspond to the operations of 7001 to 7005.

During 9001, the network node determines to configure the UE with information on the frequency ranges, bands, and channels that the network node is using. Based on this positive determination to perform this configuration, the following signalling may be performed.

During 9002, the network node 902 signals the UE 901. This signalling may comprise a system information block (SIB), such as SIB 11. This signalling may be comprised in an RRC message. This signalling may comprise a channel range per frequency band, and a potential carrier aggregation combination list. The UE 902 may store this information of 9002.

During 9003, the network node 902 signals the UE 901 to request UE capability information.

During 9004, the UE 901 signals the network node 902 to provide the requested UE capability information. This signalling may comprise a lower MSD capability information indicating a worse case value for the MSD value. The UE capability information may further comprise an indication of the UE's self-interference-measurements capability using the number of symbols required for SI measurements.

During 9005, the network node identifies a band combination for which the UE can be affected by self-interference. Stated differently, the network node 902 identifies a specific band combination as an MSD-affected frequency band combination. Based on this identification, the network node determines relevant information for configuring the UE with a measurement method that allows the UE to determine the level of self-interference in the affected receive band, before the UE reaches maximum output power. For example, the network node 902 may determination a resource grant for the UE 902 for configuring the UE with an uplink resource allocation for performing self-interference measurements. This signalling pattern may be as described above.

During 9006, the network node 902 signals the UE 901. This signalling may comprise an RRC setup message and/or an RRC reconfiguration message.

The signalling of 9006 may comprise additional information of an aperiodic allocation of an uplink symbol pattern. This additional information may comprise a periodicity of the measurements to be performed, and the slot offset to configure the uplink transmission. Optionally, the offset between DL ARFCN and uplink harmonic may be comprised in the signalling of 9006.

During 9007, the UE configures its radio so that it complies with the configuration information comprised in the signalling of 9006 (including the configuration comprised in the additional information). The UE 901 may store any information pertaining (e.g., relating to or otherwise corresponding to) a self-interference measurement configuration.

During 9008, the UE 901 signals the network node to confirm that the RRC configuration of 9006 has been applied at the UE.

During 9009, the network node 902 signals the UE to trigger the self-interference reporting on. This trigger may be signalled as discussed above. In an example, this signalling may be comprised downlink control information (e.g., by the format of a DCI information, such as DCI format 0_1).

During 9010, the UE 901 receives the slot configuration to apply the uplink configuration and measurement method of self-interference determination. Although not shown, the UE may perform measurements on the self-interference in accordance with the configuration of 9006 until the end of a preconfigured duration of time, and/or until an explicit stop request is received from the network node.

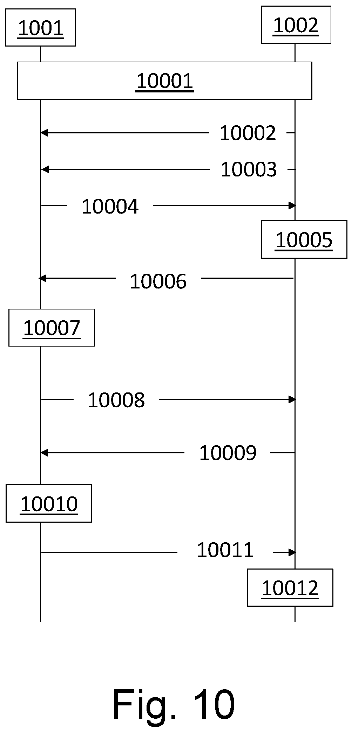

In Figures 7 to 9, reference is made to the UE providing measurement reporting to the network node. This is discussed further below with reference to Figures 10 to 11. It is understood that the following discussion and features may apply to any of the signalling operations of Figure 7 to 9.

In general, the UE may report measurement information that indicates, to a network node, an uplink transmit power used by the UE and a measured self-interference (e.g., in dBm ). In addition to this, the UE may optionally report at least one of a value of an MSD expected when the UE is transmitting at peak power, a delta (e.g., a difference value from) the static MSD value reported for the band combination, or any report indicative of the measured self-interference of the UE.

The number of symbols used to measure the self-interference per sub-band can be a UE capability that is reported by the UE (as illustrated in Figures 7 to 9). Based on the UE's indicated UE capability, the network can choose configuration to create the null pattern for use by that UE when performing self-interference measurements.

The reporting itself may be performed using at least one of a plurality of different signalling methods. For example, the measurement reporting may be provided in uplink control information (e.g., channel state information (CSI), channel quality information (CQI), PMI, etc.). The measurement reporting may be provided separately for each sub-band, and/or for an entire active bandwidth part (BWP).

As another example, the measurement reporting may be performed using a new MAC control element that comprises at least one of the self-interference measurements or the MDF at peak power, of the delta to the static MSD reported for the band combination.

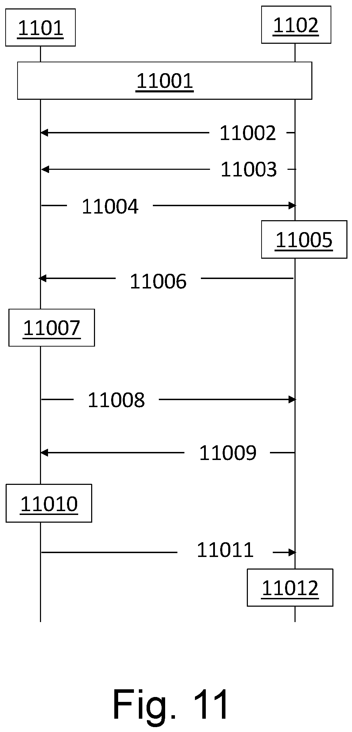

Example signalling for these different signalling methods is illustrated below with reference to Figures 10 and 11.

Figure 10 illustrates an example of SI reporting that may be performed using UCI.

Figure 10 illustrate example signalling that may be performed for periodic configuration of slots for performing self-interference measurements.

Figure 10 illustrates signalling that may be performed between a UE 1001 and a network 1002. The network node may comprise an access network node, such as described above in relation to Figure 2. The UE may comprise a terminal and/or an apparatus as described above in relation to Figure 3. 10001 to 10005 may correspond to the operations of 7001 to 7005.

During 10001, the network node determines to configure the UE with information on the frequency ranges, bands, and channels that the network node is using. Based on this positive determination to perform this configuration, the following signalling may be performed.

During 10002, the network node 1002 signals the UE 1001. This signalling may comprise a system information block (SIB), such as SIB 11. This signalling may be comprised in an RRC message. This signalling may comprise a channel range per frequency band, and a potential carrier aggregation combination list. The UE 1002 may store this information of 10002.

During 10003, the network node 1002 signals the UE 1001 to request UE capability information.

During 10004, the UE 1001 signals the network node 1002 to provide the requested UE capability information. This signalling may comprise a lower MSD capability information indicating a worse case value for the MSD value. The UE capability information may further comprise an indication of the UE's self-interference-measurements capability using the number of symbols required for SI measurements.

During 10005, the network node identifies a band combination for which the UE can be affected by self-interference. Stated differently, the network node 1002 identifies a specific band combination as an MSD-affected frequency band combination. Based on this identification, the network node determines relevant information for configuring the UE with a measurement method that allows the UE to determine the level of self-interference in the affected receive band, before the UE reaches maximum output power. For example, the network node 1002 may determination a resource grant for the UE 1001 for configuring the UE with an uplink resource allocation for performing self-interference measurements. This signalling pattern may be as described above.

During 10006, the network node 1002 signals the UE 1001. This signalling may be part of, or separate from, the signalling of any of 7006, 8006, and/or 9006.

The signalling of 10006 may comprise additional information for configuring self-interference measurement reporting at the UE 1001. This signalling may be performed using, for example, RRC signalling, such as an RRC setup message and/or an RRC reconfiguration message.

The information for configuring the self-interference measurement reporting may comprise, for example, an indication of a frequency range over which the self-interference measurement is to be performed. For example, the information for configuring the self-interference measurement reporting may comprise an indication of a sub-band size (e.g., in PRBs) or a wideband (that indicates that the entire BWP is to be measured).

The information for configuring the self-interference measurement reporting may comprise an indication of what parameters are to be reported on by the UE. For example, the information for configuring the self-interference measurement reporting may comprise an indication that a measured self-interference is to be reported on (dBm) and/or that an output power is to be reported on (e.g., in dBm).

The information for configuring the self-interference measurement reporting may comprise a parameter to report an MSD value that is expected for the UE when the UE is transmitting at a at peak power.

The information for configuring the self-interference measurement reporting may comprise timing information, such as a reporting slot offset, that indicates when the UE should provide a measurement report.

During 10007, the UE configures its radio so that it complies with the configuration information comprised in the signalling of 10006 (including the reporting configuration comprised in the additional information). The UE 1001 may store any information pertaining (e.g., relating to or otherwise corresponding to) a self-interference measurement configuration.

During 10008, the UE 1001 signals the network node to confirm that the RRC configuration of 10006 has been applied at the UE.

During 10009, the network node 1002 signals the UE to trigger the self-interference reporting on. This trigger may be signalled as discussed above. In an example, this signalling may be comprised in a media access control CE instruction. This signalling may indicate whether the reporting is to be periodic or aperiodic. This signalling may identify at least one slot in which a self-interference measurement is to be performed by the UE.

During 10010, the UE 1001 performs its self-interference measurements in accordance with its configuration. Although not shown, the UE may perform measurements on the self-interference in accordance with the configuration of any of 7006, 8006, and/or 9006.

During 10011, the UE 1001 reports its self-interference measurement results in accordance with the configuration of 10006. This signalling may use a slot indicated during the configuration of 10006. This signalling is illustrated as comprising UCI containing the requested self-interference measurement parameters in the self-interference reporting format configured during 10006.

During 10012, the network node uses the reported self-interference level and the associated output power to derive the current MSD value for the UE. This determined current MSD value may be used by the network node 1002 for making RRC management decisions.

The network may derive the MSD value based on information of the MSD type found within the standard.

When the delta between the absolute output power level and the maximum output power level of the given configuration is known to the network, each 1 dB step up in power from the UE absolute output power may cause an increase in the self-interference level according to the order of the harmonic. For example, a third order harmonic will increase in power 3:1. The MSD value is found by adding to the absolute level of self-interference the delta, between the UE absolute power level and the maximum output power level, multiplied by the order of the harmonic. If this signal level of the self-interference exceeds the REFSENS level then the amount of dB it exceeds the REFSENS equals the MSD value. If the level of the self-interference does not exceed the REFSENS level, then the MSD value is 0dB. The network can use this value as the exact dynamically measured UE MSD value rather than the static reported lower MSD value found in the UE capability reporting, since this is based on direct hit as described in the configuration of the 3GPP specification.

Figure 11 illustrates example signalling that may be performed for configuring the UE to report the self-interference measurement information using a MAC CE.

Figure 11 illustrate example signalling that may be performed for periodic configuration of slots for performing self-interference measurements.

Figure 11 illustrates signalling that may be performed between a UE 1101 and a network node 1102. The network node may comprise an access network node, such as described above in relation to Figure 2. The UE may comprise a terminal and/or an apparatus as described above in relation to Figure 3. 11001 to 11005 may correspond to the operations of 7001 to 7005.

During 11001, the network node determines to configure the UE with information on the frequency ranges, bands, and channels that the network node is using. Based on this positive determination to perform this configuration, the following signalling may be performed.

During 11002, the network node 1102 signals the UE 1101. This signalling may comprise a system information block (SIB), such as SIB 11. This signalling may be comprised in an RRC message. This signalling may comprise a channel range per frequency band, and a potential carrier aggregation combination list. The UE 1101 may store this information of 11002.

During 11003, the network node 1102 signals the UE 1101 to request UE capability information.

During 11004, the UE 1101 signals the network node 1102 to provide the requested UE capability information. This signalling may comprise a lower MSD capability information indicating a worse case value for the MSD value. The UE capability information may further comprise an indication of the UE's self-interference-measurements capability using the number of symbols required for SI measurements.

During 11005, the network node identifies a band combination for which the UE can be affected by self-interference. Stated differently, the network node 1102 identifies a specific band combination as an MSD-affected frequency band combination. Based on this identification, the network node determines relevant information for configuring the UE with a measurement method that allows the UE to determine the level of self-interference in the affected receive band, before the UE reaches maximum output power. For example, the network node 1102 may determination a resource grant for the UE 1102 for configuring the UE with an uplink resource allocation for performing self-interference measurements. This signalling pattern may be as described above.

During 11006, the network node 1102 signals the UE 1101. This signalling may be part of, or separate from, the signalling of any of 7006, 8006, and/or 9006.

The signalling of 11006 may comprise additional information for configuring self-interference measurement reporting at the UE 1101. This signalling may be performed using, for example, RRC signalling, such as an RRC setup message and/or an RRC reconfiguration message.

For example, the information for configuring the self-interference measurement reporting may comprise an indication that a measured self-interference level is to be reported on (dBm).

The information for configuring the self-interference measurement reporting may comprise a parameter to report an MSD value that is expected for the UE when the UE is transmitting at maximum output power according to power class.

The information for configuring the self-interference measurement reporting may comprise an indication that a delta is to be reported that indicates a difference between an MSD determined at the UE using self-interference measurement information, and an MSD value previously indicated for that frequency band combination.

During 11007, the UE configures its radio so that it complies with the configuration information comprised in the signalling of 11006 (including the reporting configuration comprised in the additional information). The UE 1101 may store any information pertaining (e.g., relating to or otherwise corresponding to) a self-interference measurement configuration.

During 11008, the UE 1101 signals the network node to confirm that the RRC configuration of 11006 has been applied at the UE.

During 11009, the network node 1102 signals the UE to trigger the self-interference reporting on. This trigger may be signalled as discussed above. In an example, this signalling may be comprised in a media access control CE instruction. This signalling may indicate whether the reporting is to be periodic or aperiodic. This signalling may identify at least one slot in which a self-interference measurement is to be performed by the UE.

During 11010, the UE 1101 performs its self-interference measurements in accordance with its configuration. Although not shown, the UE may perform measurements on the self-interference in accordance with the configuration of any of 7006, 8006, and/or 9006.

During 11011, the UE 1101 reports its self-interference measurement results in accordance with the configuration of 11006. This signalling may use a slot indicated during the configuration of 11006. This signalling is illustrated as comprising a MAC control element containing the requested self-interference measurement parameters in the self-interference reporting format configured during 11006.

During 11012, the network node uses the reported self-interference level and the associated output power to derive the current MSD value for the UE. This determined current MSD value may be used by the network node 1102 for making RRC management decisions.

The network may derive the MSD value based on information of the MSD type found within the 3GPP standard.

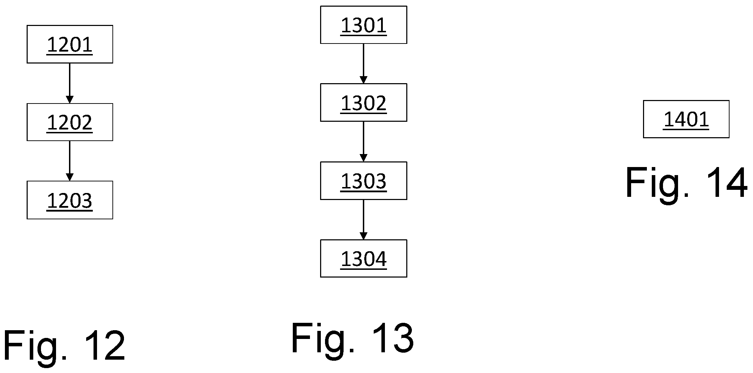

Figures 12 to 14 illustrate illustrations that may be performed by at least some of the apparatus described above. It is therefore understood that the following features may be provided with further context in reference to the above non-limiting examples.

Figure 12 illustrates operations that may be performed by an apparatus for a user equipment. The apparatus for the user equipment may be as described above in relation to Figure 3.

During 1201, the apparatus receives, from a network node, a configuration comprising an uplink transmission pattern associated with a combination of uplink and downlink carriers, wherein the uplink transmission pattern is to be used by the user equipment when performing self-interference measurements, the uplink transmission pattern comprising a mixture of active resource elements and empty resource elements. The network node may be as described below in relation to Figure 12.

The empty resource elements may be labelled as "null transmissions" and/or "inactive resource elements". The active resource elements may be labelled as "transmissions". The active resource elements may comprise at least one uplink transmission made on a frequency (e.g., carrier or subcarrier) on an OFDM symbol. The empty resource elements may comprise an absence of uplink transmission on a frequency (e.g., carrier or subcarrier) on an OFDM symbol. Stated differently, the "no transmission creating empty resource elements" may be understood to be empty resource elements (e.g., resource elements that do not correspond to a transmission, or that otherwise correspond to a null transmission). The no transmission creating empty resource elements may be resource elements in which the apparatus abstains from transmitting. For example, the no transmission creating empty resource elements may be resource elements in which data is not transmitted uplink, whereas the active resource elements may be resource elements in which data is transmitted uplink.

The uplink transmission pattern may define, for at least one timing unit (e.g., an OFDM symbol), a pattern of null and not-null frequencies used for the uplink. The uplink transmission pattern may be alternating (e.g., null-transmission-null-transmission, etc.), or may have some other pattern, such as described above.

The uplink transmission pattern may be considered as a repetitive frequency pattern for transmission. It is understood that the uplink transmission pattern may extend for only part of the entire uplink frequency allocation available to the user equipment.

During 1202, the apparatus receives, from the network node, at least one indication of a transmission occasion when the user equipment should perform self interference measurements based on the combination of uplink and downlink carriers.

During 1203, the apparatus transmits, to the network node, at least one value indicative of a measured self interference at the user equipment during the transmission occasion.

The apparatus may perform self interference measurements based on the received configuration and the received at least one indication of a transmission occasion to obtain the at least one value indicative of a measured self-interference. Stated differently, during 1203, the apparatus makes transmissions in accordance with the received uplink transmission configuration during the transmission occasion, and makes measurements for determining self-interference experienced by the apparatus during that transmission occasion.

The empty resource elements may be configured to alternate with the active resource elements (e.g., such that the frequencies in a symbol timing alternate between used resource elements and empty resource elements, such as empty-used-empty-used). This is similar to the example of DMRS mode 1. It is understood that other empty resource element transmission patterns may be configured in the uplink transmission pattern using other mechanisms, such as described above.

The uplink transmission pattern may comprise consecutive active resource elements followed by consecutive empty resource elements that are allocated in consecutive frequency resources. The number of empty resource elements may be equal to or larger than the number of active resource elements when the source of self-interference is determined to be an uplink harmonic. The number of empty resource elements may be smaller than the number of active resource elements when the source of self-interference is determined to be an uplink fundamental frequency.

The apparatus may perform a frequency offset compensation for aligning uplink harmonic subcarriers and/or uplink fundamental subcarriers with respect to a physical resource block grid of a downlink absolute radio frequency channel number.

The performing the frequency offset compensation may comprise performing at least one of: determining an uplink harmonic to downlink frequency offset by calculating the modulus of (uplink channel number*harmonic order - downlink channel number, uplink subcarrier spacing), or may comprise determining a downlink harmonic to downlink frequency offset by calculating the modulus of (downlink channel number*harmonic order - uplink channel number, uplink subcarrier spacing).

The at least one value indicative of a measured self-interference at the user equipment during the transmission occasion may comprise at least one of: a measure self-interference level, a measured output power, a maximum sensitivity degradation calculated by the user equipment based on the performed self-interference measurements, or a difference between a reference maximum sensitivity degradation and a maximum sensitivity degradation calculated by the user equipment based on self-interference measurements.

The at least one indication of a transmission occasion may comprise at least one of: an indication of a periodicity of transmission of the uplink transmission pattern; an indication of a slot offset (defined with respect to a known timing reference, such as a slot number within a radio frame); an indication of a number of measurement symbols; an indication of a number of consecutive slots with a measurement; an indication of where those measurement symbols are located within a time slot; an indication of a frequency offset of an uplink harmonic to a downlink absolute reference channel number; an indication of a freqeuncy offset of an uplink fundamental to a downlink absolute reference channel number; an indication of a frequency sub-band size for reporting self-interference; or a trigger for indicating the transmission opportunity.

The apparatus may receive, from the network node, an instruction to stop performing self-interference measurements. The instruction may be received separately from the instruction to start performing self-interference measurements, or may be received with the instruction to start performing self-interference measurements (e.g., when it is provided in the form of a time duration over which measurements are to be performed).

The trigger may comprise an indication of whether the user equipment should stop or start performing self-interference measurements.

At least part of the at least one indication of a transmission occasion may be received in a radio resource control message, and/or media access control element and/or downlink control information.

The apparatus may further be caused to receive, from the network node, a request for user equipment capability information, and transmit, to the network node, user equipment capability information, the user equipment capability information comprising: a number of symbols required by the user equipment for performing self-interference measurements.

The apparatus may further be caused to receive, from the network node, an indication of what parameter(s) the at least one value should correspond to.

The transmitting the at least one value indicative of a measured self-interference may comprise transmitting the at least one value using at least one of a radio resource control message, a media access control element, or downlink control information.

The uplink transmission pattern comprising a mixture of active resource elements and empty resource elements may correspond to at least one of: a physical uplink shared channel demodulation reference signal, a physical uplink control channel demodulation reference signal, a sounding reference signal, or a physical uplink shared channel rate matched around predefined zero resource elements.

Figure 13 illustrates operations that may be performed by an apparatus for a network node. The network node may comprise a network access node, such as described above in relation to Figure 2. The network node may comprise any of a base station, a gNB, etc.

During 1301, the apparatus determines an uplink transmission pattern to be associated with a combination of uplink and downlink carriers, the uplink transmission pattern comprising a mixture of active resource elements and empty resource elements. This uplink transmission pattern may be as described above in relation to Figure 12.

During 1302, the apparatus configures a user equipment with the uplink transmission pattern, wherein the uplink transmission pattern is to be used by the user equipment when performing self-interference measurements.

During 1303, the apparatus transmits, to the user equipment, at least one indication of a transmission occasion when the user equipment should perform self-interference measurements based on the combination of uplink and downlink carriers.

During 1304, the apparatus receives, from the user equipment, at least one value indicative of a measured self-interference at the user equipment during the transmission occasion.

The apparatus may receive in accordance with the uplink transmission pattern during the transmission occasion.

The empty resource elements may be configured to alternate with the active resource elements (e.g., such that the frequencies in a symbol timing alternate between used resource elements and empty resource elements, such as empty-used-empty-used). This is similar to the example of DMRS mode 1. It is understood that other empty resource element transmission patterns may be configured in the uplink transmission pattern using other mechanisms, such as described above.

The at least one indication of a transmission occasion may comprise at least one of: an indication of a periodicity of transmission of the uplink transmission pattern; an indication of a slot offset; an indication of a number of measurement symbols; an indication of a number of consecutive slots with a measurement; an indication of where those measurement symbols are located within a time slot; an indication of a frequency offset of an uplink harmonic to a downlink absolute reference channel number; an indication of a frequency offset of an uplink fundamental to a downlink absolute reference channel number; an indication of a frequency sub-band size for reporting self-interference; or a trigger for indicating the transmission opportunity.

The trigger may comprise at least one of a media access control element that instructs the user equipment to perform a self-interference measurement, or a downlink control information format that indicates to the user equipment to perform a self-interference measurement, wherein the trigger comprises an indication of when the user equipment should stop or start performing self-interference measurements.

The apparatus may transmit, to the user equipment, an instruction to stop performing self-interference measurements.

At least part of the at least one indication of a transmission occasion may be transmitted using a radio resource control message and/or media access control element and/or downlink control information.

The apparatus may further be caused to transmit, to the user equipment, a request for user equipment capability information; and receive, from the user equipment, user equipment capability information, the user equipment capability information comprising: a number of symbols required by the user equipment for performing self-interference measurements.

The at least one value indicative of a measured self-interference at the user equipment during the transmission occasion may comprise at least one of: a measure self-interference level, a measured output power, or difference between a reference maximum sensitivity degradation and a maximum sensitive degradation calculated by the user equipment based on self-interference measurements. The apparatus may further be caused to: determine a maximum sensitivity degradation based on the received value(s); and use the determined maximum sensitivity degradation to make radio resource control decisions (such as resource element allocation to the user equipment). The apparatus may implement the made RRC decisions (e.g., the apparatus may perform resource allocation to the user equipment using the determined maximum sensitivity degradation value).

The at least one value indicative of a measured self-interference at the user equipment during the transmission occasion may comprise a maximum sensitivity degradation calculated by the user equipment based on self-interference measurements, and the apparatus comprises means for using the indicated maximum sensitive degradation calculated by the user equipment to make radio resource control decisions.

The apparatus may transmit, to the user equipment, an indication of what parameter(s) the at least one value should correspond to. For example, the apparatus may instruct the user equipment whether the determined MSD value is to be reported by the user equipment, and/or measurement values for use by the network node in determining the determined MSD value. Such measurement values may comprise, for example, an indication of pairs of uplink transmission power and a downlink receive power and/or a ratio of uplink transmission power to downlink receive power for a plurality of measurement performed over the course of the duration of time over which the measurements were made.

Figure 14 illustrates operations that may be performed by an apparatus of a user equipment when causing self-interference measurements to be performed. It is understood that the user equipment may have been configured as described above in relation to Figure 12 with the information for performing the self-interference measurements, or may have been configured in some other way. Stated differently, the following operations relate to how a user equipment performs self-interference measurements, and not to the configuration of the user equipment for performing such operations per se.

The apparatus for a user equipment may be correspond to the apparatus described in relation to Figure 3.

During 1401, the apparatus obtains, based on at least one downlink carrier received during an uplink transmission, at least one value indicative of a self-interference by measuring a power difference in downlink resource elements affected by active resource elements of the uplink transmission and downlink resource elements affected by empty resource elements of the uplink transmission.

The apparatus may transmit the at least one value to a network node.

The transmitting the at least one value indicative of a measured self interference may comprise transmitting the at least one value using at least one of a radio resource control message, a media access control element, or downlink control information.

The apparatus may receive, from the network node, a configuration comprising an uplink transmission pattern associated with a combination of uplink and downlink carriers, wherein the uplink transmission pattern is to be used by the user equipment when performing self interference measurements, the uplink transmission pattern comprising a mixture in frequency of active resource elements (e.g., transmissions in active resource elements) and empty resource elements (no transmission creating empty resource elements), wherein the means for obtaining the at least one value may be performed based on the received uplink transmission pattern.

The uplink transmission pattern may correspond to at least one of: a physical uplink shared channel demodulation reference signal, a physical uplink control channel demodulation reference signal, a sounding reference signal, or a physical uplink shared channel rate matched around predefined zero resource elements.

The transmission pattern may comprise consecutive active resource elements followed by consecutive empty resource elements that are allocated in consecutive frequency resources. The number of empty resource elements may be equal to or larger than the number of active resource elements when the source of self-interference is determined to be an uplink harmonic. The number of empty resource elements may be smaller than the number of active resource elements when the source of self-interference is determined to be an uplink fundamental frequency.

The apparatus may further receive, from the network node, at least one indication of a transmission occasion when the user equipment should perform self interference measurements based on a combination of uplink and downlink carriers, wherein the means for obtaining is performed during the transmission occasion.

The apparatus may transmit using at least one of said uplink carriers during the transmission occasion.

The at least one value indicative of a measured self interference at the user equipment during the transmission occasion may comprise at least one of: a measure self interference level, a measured output power, a maximum sensitivity degradation calculated by the user equipment based on the performed self interference measurements, or a difference between a reference maximum sensitivity degradation and a maximum sensitivity degradation calculated by the user equipment based on self interference measurements.

The at least one indication of a transmission occasion may comprise at least one of: an indication of a periodicity of transmission of the uplink transmission pattern; an indication of a slot offset; an indication of a number of measurement symbols; an indication of a number of consecutive slots with a measurement; an indication of where those measurement symbols are located within a time slot; an indication of a frequency offset of an uplink fundamental or harmonic to a downlink absolute reference channel number; an indication of a frequency offset of an uplink fundamental to a downlink absolute reference channel number; an indication of a frequency sub-band size for reporting self-interference; or a trigger for indicating the transmission opportunity.

The trigger may comprise an indication of whether the user equipment should stop or start performing self interference measurements.

At least part of the at least one indication of a transmission occasion may be received in a radio resource control message, and/or media access control element and/or downlink control information.

The apparatus may further receive from the network node, an instruction to stop performing self interference measurements.

The obtaining may further comprise: aligning self-interference measurement timing by aligning a fast fourier transform timing to an uplink symbol grid; aligning a self-interference measurement frequency by performing a frequency offset compensation for aligning uplink subcarriers and/or uplink harmonic subcarriers with respect to a physical resource block grid of a downlink absolute radio frequency channel number, and measuring a power difference by measuring a power difference in downlink resource elements received during the active resource elements relative to the downlink resource elements received during the empty resource elements, wherein the at least one value is indicative of said power difference.

The obtaining may further comprise: aligning self-interference measurement timing by using a fast fourier transform timing aligned to a downlink symbol grid to perform the measurements by performing a time offset compensation for an uplink symbol grid using a timing advance value, means for aligning a self-interference measurement frequency by performing a frequency offset compensation for aligning uplink harmonic subcarriers and/or uplink fundamental subcarriers with respect to a physical resource block grid of a downlink absolute radio frequency channel number, and measuring a power difference by measuring a power difference in downlink resource elements received during the active resource elements relative to the downlink resource elements received during the empty resource elements, wherein the at least one value is indicative of said power difference.

The downlink resource elements affected by active resource elements of uplink transmission and the downlink resource elements affected by empty resource elements of uplink transmission may be determined to be in alternate frequency resources.

The aligning a self-interference measurement frequency may comprise at least one of: determining an uplink fundamental or uplink harmonic to downlink frequency offset by calculating the modulus of (uplink channel number*harmonic order - downlink channel number, uplink subcarrier spacing), or determining a downlink harmonic to downlink frequency offset by calculating the modulus of (downlink channel number*harmonic order - uplink channel number, uplink subcarrier spacing).

The apparats may receive, from the network node, a request for user equipment capability information, and transmit, to the network node, user equipment capability information, the user equipment capability information comprising: a number of symbols required by the user equipment for performing self-interference measurements.

The apparatus may receive, from the network node, an indication of what parameter(s) the at least one value should correspond to.

These features described above in relation to Figure 14 may correspond to at least two different methods for performing self-interference.

For example, for a first method, there may be provided a user equipment that is configured to perform a timing alignment by using a separate FFT whose FFT window is aligned to the UL OFDM symbol frame. That user equipment may further perform a frequency alignment by performing a frequency offset compensation for the misalignment of UL harmonic sub-carriers with respect to the DL ARFCN grid. The user equipment may Measure the power in the even- and odd sub-carriers within a sub-band separately. Finally, the user equipment may determine a difference in power between subcarriers (e.g., odd and even sub-carriers in an example) to give a value for a self-interference metric within that sub-band under the assumption that DL signal and any other external interference has no empty resources within that sub-band.

For example, for a second method, there may be provided a user equipment that is configured to perform a timing alignment by using a FFT window aligned to the DL OFDM symbol frame and using a time offset compensation for the timing advance the uplink frame has (the timing advance may be received from the network via any appropriate signalling). That user equipment may further perform a frequency alignment by performing a frequency offset compensation for the misalignment of UL harmonic sub-carriers with respect to the DL ARFCN grid. The user equipment may Measure the power in the even- and odd sub-carriers within a sub-band separately. Finally, the user equipment may determine a difference in power between subcarriers (e.g., odd and even sub-carriers in an example) to give a value for a self-interference metric within that sub-band under the assumption that DL signal and any other external interference has no empty resources within that sub-band.

The above-described methods have a plurality of different advantages. For example, by enabling the user equipment to perform self-interference measurements, an exact MSD determination may be performed, which can be used to avoid potential call drop/carrier drop due to a carrier aggregation configuration being affected by MSD.

It is understood that the above-mentioned references to "allocation" and "scheduling", etc. refer to the allocation of resource elements (e.g., time-frequency resources).

It should be understood that the apparatuses may comprise or be coupled to other units or modules etc., such as radio parts or radio heads, used in or for transmission and/or reception. Although the apparatuses have been described as one entity, different modules and memory may be implemented in one or more physical or logical entities.

It is noted that whilst some embodiments have been described in relation to 5G networks, similar principles can be applied in relation to other networks and communication systems. Therefore, although certain embodiments were described above by way of example with reference to certain example architectures for wireless networks, technologies and standards, embodiments may be applied to any other suitable forms of communication systems than those illustrated and described herein.

It is also noted herein that while the above describes example embodiments, there are several variations and modifications which may be made to the disclosed solution without departing from the scope of the present invention.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

In general, the various embodiments may be implemented in hardware or special purpose circuitry, software, logic or any combination thereof. Some aspects of the disclosure may be implemented in hardware, while other aspects may be implemented in firmware or software which may be executed by a controller, microprocessor or other computing device, although the disclosure is not limited thereto. While various aspects of the disclosure may be illustrated and described as block diagrams, flow charts, or using some other pictorial representation, it is well understood that these blocks, apparatus, systems, techniques or methods described herein may be implemented in, as non-limiting examples, hardware, software, firmware, special purpose circuits or logic, general purpose hardware or controller or other computing devices, or some combination thereof.

As used in this application, the term "circuitry" may refer to one or more or all of the following:
(a) hardware-only circuit implementations (such as implementations in only analog and/or digital circuitry) and
(b) combinations of hardware circuits and software, such as (as applicable):
(c) a combination of analog and/or digital hardware circuit(s) with software/firmware and
(d) any portions of hardware processor(s) with software (including digital signal processor(s)), software, and memory(ies) that work together to cause an apparatus, such as a mobile phone or server, to perform various functions) and
(e) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

The embodiments of this disclosure may be implemented by computer software executable by a data processor of the mobile device, such as in the processor entity, or by hardware, or by a combination of software and hardware. Computer software or program, also called program product, including software routines, applets and/or macros, may be stored in any apparatus-readable data storage medium and they comprise program instructions to perform particular tasks. A computer program product may comprise one or more computer-executable components which, when the program is run, are configured to carry out embodiments. The one or more computer-executable components may be at least one software code or portions of it.

Further in this regard it should be noted that any blocks of the logic flow as in the Figures may represent program steps, or interconnected logic circuits, blocks and functions, or a combination of program steps and logic circuits, blocks and functions. The software may be stored on such physical media as memory chips, or memory blocks implemented within the processor, magnetic media such as hard disk or floppy disks, and optical media such as for example DVD and the data variants thereof, CD. The physical media is a non-transitory media.

The term "non-transitory," as used herein, is a limitation of the medium itself (i.e., tangible, not a signal ) as opposed to a limitation on data storage persistency (e.g., RAM vs. ROM).

The memory may be of any type suitable to the local technical environment and may be implemented using any suitable data storage technology, such as semiconductor based memory devices, magnetic memory devices and systems, optical memory devices and systems, fixed memory and removable memory. The data processors may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Embodiments of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

The scope of protection sought for various embodiments of the disclosure is set out by the independent claims. The embodiments and features, if any, described in this specification that do not fall under the scope of the independent claims are to be interpreted as examples useful for understanding various embodiments of the disclosure.

The foregoing description has provided by way of non-limiting examples a full and informative description of the exemplary embodiment of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further embodiment comprising a combination of one or more embodiments with any of the other embodiments previously discussed.

## Claims

1. An apparatus for a user equipment, the apparatus comprising means for performing:
obtaining, based on at least one downlink carrier received during an uplink transmission, at least one value indicative of a self-interference by measuring a power difference in downlink resource elements affected by active resource elements of the uplink transmission and downlink resource elements affected by empty resource elements of the uplink transmission.

2. An apparatus as claimed in claim 1, further comprising means for transmitting the at least one value to a network node, wherein the means for transmitting the at least one value indicative of a measured self-interference comprises means for transmitting the at least one value using at least one of a radio resource control message, a media access control element, or downlink control information.

3. An apparatus as claimed in any preceding claim, comprising means for receiving, from the network node, a configuration comprising an uplink transmission pattern associated with a combination of uplink and downlink carriers, wherein the uplink transmission pattern is to be used by the user equipment when performing self-interference measurements, the uplink transmission pattern comprising a mixture in frequency of transmissions in active resource elements and no transmission creating empty resource elements, wherein the means for obtaining the at least one value is performed based on the received uplink transmission pattern.

4. An apparatus as claimed in claim 3, wherein the uplink transmission pattern corresponds to at least one of: a physical uplink shared channel demodulation reference signal, a physical uplink control channel demodulation reference signal, a sounding reference signal, or a physical uplink shared channel rate matched around predefined zero resource elements.

5. An apparatus as claimed in any of claims 3 to 4, wherein the transmission pattern comprises consecutive active resource elements followed by consecutive empty resource elements that are allocated in consecutive frequency resources, and wherein the number of empty resource elements being equal to or larger than the number of active resource elements and/or wherein the number of empty resource elements is smaller than the number of active resource elements when the source of self-interference is determined to be an uplink fundamental.

6. An apparatus as claimed in any preceding claim, further comprising means for receiving, from the network node, at least one indication of a transmission occasion when the user equipment should perform self-interference measurements based on a combination of uplink and downlink carriers, wherein the means for obtaining is performed during the transmission occasion.

7. An apparatus as claimed in claim 6, wherein the at least one value indicative of a measured self-interference at the user equipment during the transmission occasion comprises at least one of: a measure self-interference level, a measured output power, a maximum sensitivity degradation calculated by the user equipment based on the performed self-interference measurements, or a difference between a reference maximum sensitivity degradation and a maximum sensitivity degradation calculated by the user equipment based on self-interference measurements.

8. An apparatus as claimed in any of claims 6 to 7, wherein the at least one indication of a transmission occasion comprises at least one of:
a. an indication of a periodicity of transmission of the uplink transmission pattern;
b. an indication of a slot offset;
c. an indication of a number of measurement symbols;
d. an indication of a number of consecutive slots with a measurement;
e. an indication of where those measurement symbols are located within a time slot;
f. an indication of a frequency offset of an uplink fundamental or harmonic to a downlink absolute reference channel number;
g. an indication of a frequency offset of an uplink fundamental to a downlink absolute reference channel number;
h. an indication of a frequency sub-band size for reporting self-interference; or
i. a trigger for indicating the transmission opportunity.

9. An apparatus as claimed in any of claims 6 to 8, wherein at least part of the at least one indication of a transmission occasion is received in a radio resource control message, and/or media access control element and/or downlink control information.

10. An apparatus as claimed in any preceding claim, wherein the means for obtaining further comprises:
means for aligning self-interference measurement timing by aligning a fast fourier transform timing to an uplink symbol grid,
means for aligning a self-interference measurement frequency by performing a frequency offset compensation for aligning uplink subcarriers and/or uplink harmonic subcarriers with respect to a physical resource block grid of a downlink absolute radio frequency channel number, and
means for measuring a power difference by measuring a power difference in downlink resource elements received during the active resource elements relative to the downlink resource elements received during the empty resource elements, wherein the at least one value is indicative of said power difference.

11. An apparatus as claimed in any of claims 1 to 9, wherein the means for obtaining further comprises:
means for aligning self-interference measurement timing by using a fast fourier transform timing aligned to a downlink symbol grid to perform the measurements by performing a time offset compensation for an uplink symbol grid using a timing advance value,
means for aligning a self-interference measurement frequency by performing a frequency offset compensation for aligning uplink harmonic subcarriers and/or uplink fundamental subcarriers with respect to a physical resource block grid of a downlink absolute radio frequency channel number, and
means for measuring a power difference by measuring a power difference in downlink resource elements received during the active resource elements relative to the downlink resource elements received during the empty resource elements, wherein the at least one value is indicative of said power difference.

12. An apparatus as claimed in any of claims 10 to 11, wherein the downlink resource elements affected by active resource elements of uplink transmission and the downlink resource elements affected by empty resource elements of uplink transmission are determined to be in alternate frequency resources.

13. An apparatus as claimed in any of claims 10 to 12, wherein the means for aligning a self-interference measurement frequency comprises means for performing at least one of:
determining an uplink fundamental or uplink harmonic to downlink frequency offset by calculating the modulus of (uplink channel number*harmonic order - downlink channel number, uplink subcarrier spacing), or
determining a downlink harmonic to downlink frequency offset by calculating the modulus of (downlink channel number*harmonic order - uplink channel number, uplink subcarrier spacing).

14. An apparatus as claimed in any preceding claim, further comprising means for:
receiving, from the network node, a request for user equipment capability information; and
transmitting, to the network node, user equipment capability information, the user equipment capability information comprising: a number of symbols required by the user equipment for performing self-interference measurements.

15. A method for an apparatus for a user equipment, the method comprising:
obtaining, based on at least one downlink carrier received during an uplink transmission, at least one value indicative of a self-interference by measuring a power difference in downlink resource elements affected by active resource elements of the uplink transmission and downlink resource elements affected by empty resource elements of the uplink transmission.
